# EUROPÄISCHE PATENTANMELDUNG

(11) **EP 2 597 076 A1**
(43) Veröffentlichungstag der Anmeldung: **29.05.2013**
(21) Anmeldenummer: 11190992.5
(22) Anmeldetag: 28.11.2011
(51) Int. Cl.: C04B 35/634

(54) **Zusammensetzung zur Herstellung von Keramikteilen**

(71) Anmelder: Inmatec Technologies GmbH, 53359 Rheinbach (DE)
(72) Erfinder: Jegust, Stephan, 53225 Bonn-Beuel (DE); Dr. von Witzleben, Moritz, 50968 Köln (DE); Dr. Hajek, Karin, 53347 Alfter (DE)
(74) Vertreter: Tergau & Walkenhorst

(57) **Zusammenfassung**

Die vorliegende Erfindung betrifft eine Zusammensetzung zur Herstellung von Keramikteilen, insbesondere mittels Keramikspritzgussverfahrens, ein Verfahren zu deren Herstellung sowie deren Verwendung

## Beschreibung

Die Erfindung betrifft eine Zusammensetzung zur Herstellung von Keramikteilen, ein Verfahren zu deren Herstellung sowie deren Verwendung.

Keramische Materialien kommen heutzutage auf Grund ihrer werkstoffspezifischen Eigenschaften immer stärker in Bereichen der Chemietechnik, des Maschinenbaus, der Kfz-Technik, sowie in der Elektro-, Consumer- und Verfahrenstechnik zum Einsatz.

Hochkomplexe Geometrien können dabei mit Hilfe des so genannten Hochdruck-Keramikspritzgussverfahrens (CIM = *Ceramic Injection Molding*) in großen Stückzahlen wirtschaftlich und in gleichbleibender Qualität herstellt werden. Das Keramikspritzgussverfahren ist ein plastisches Formgebungsverfahren, bei dem eine thermoplastische Masse (Compound), welche Keramikpulver und organische Binder umfasst, in ein Werkzeug eingespritzt wird. Nach Abkühlung wird das Bauteil dem Werkzeug entnommen und kann direkt nachführenden (thermischen) Prozessen, wie Entbinderung und daran anschließender Sinterung, zugeführt werden. Die so erhaltenen keramischen Bauteile bedürfen in der Regel keiner weiteren Nachbearbeitung.

Ein ähnliches Verfahren ist der so genannte Metallpulverspritzguss (MIM = *Metal Injection Molding*), mit dessen Hilfe Metallteile in ebenfalls großen Stückzahlen wirtschaftlich und in gleichbleibender Qualität hergestellt werden können.

Um eine hohe Präzision und Beanspruchbarkeit der keramischen Materialien zu erzielen, sind fehlerfreie Mikrogefüge der Keramiken erforderlich. Die Mikrogefüge der Keramiken werden allerdings stark durch die Zusammensetzung und die Homogenität des Compounds beeinflusst und es können Gefügefehler in dem keramischen Material, beispielsweise in Form von Lunkern, texturierter Porosität und fehlerhafter Schwindung, auftreten, wodurch die Belastbarkeit der keramischen Materialien deutlich reduziert wird.

Die aus dem Stand der Technik bekannten Compoundsysteme zur Herstellung keramischer Materialien bestehen aus einer Vielzahl an organischen Komponenten wie Bindern und weiteren Additiven, welche in ihrer Mischung die erforderliche Fließfähigkeit im heißen Zustand und nach Abkühlung eine hohe Bauteilfestigkeit gewährleisten sollen. Die bekannten Compoundsysteme zur Herstellung keramischer Materialien bedürfen in Ihrer Handhabbarkeit und Performance noch immer der Verbesserung, um mit Hilfe des Hochdruck-Keramikspritzgussverfahrens fehlerfreie Keramikteile in großer Stückzahl herzustellen, die den stetig steigenden Anforderungen, insbesondere im Maschinenbau- und Automobilbereich, gerecht werden.

Somit liegt der vorliegenden Erfindung die Aufgabe zu Grunde, eine Zusammensetzung zur Herstellung von Keramikteilen, insbesondere mittels Keramikspritzgussverfahrens, zur Verfügung zu stellen, welche es ermöglicht, Keramiken großtechnisch in hoher Qualität herzustellen.

Gelöst wird diese Aufgabe durch eine Zusammensetzung enthaltend:
A) 25 bis 65 Vol.-% eines sinterbaren Keramikpulvers oder einer Mischung aus einem Keramik- mit einem Metallpulver, und als Bindemittel
B) 35 bis 75 Vol.-% einer Mischung aus:
   B1) 20 bis 35 Gew.-% eines Polyolefinwachses mit einem Tropfpunkt von 104 bis 117°C, einer Säurezahl von 16 bis 27 mg KOH/g, einer Verseifungszahl von 0 bis 95 mg KOH/g, einer Dichte von 0,91 bis 0,97 g/cm³ und einer Viskosität bei 140 °C von 100 bis 700 mPa s,
   B2) 1 bis 12 Gew.-% eines Polyolefins mit einer Dichte von 0,915 bis 0,935 g/cm³ und einem Schmelzpunkt von 100 bis 145 °C,
   B3) 5 bis 15 Gew.-% eines Polyvinyl-Butyralharzes mit einem Schmelzpunkt von 135 bis 210 °C,
   B4) 40 bis 60 Gew.-% Polyethylenglykol mit einem mittleren Molekulargewicht von 3.500 bis 20.000 g/mol, und
   B5) 1 bis 10 Gew.-% einer Fettsäure mit 10 bis 24 Kohlenstoffatomen.

Die Volumenprozentbeträge werden dabei zweckmäßigerweise derart ausgewählt, dass diese in Summe 100 Volumenprozent (Vol.-%) ergeben. Die Gewichtsprozentbeträge werden dabei zweckmäßigerweise derart ausgewählt, dass diese in Summe 100 Gewichtsprozent (Gew.-%) ergeben.

Die Erfindung betrifft ferner ein Bindemittel, insbesondere zur Herstellung einer Zusammensetzung zur Herstellung von Keramikteilen, enthaltend:
B1) 20 bis 35 Gew.-% eines Polyolefinwachses mit einem Tropfpunkt von 104 bis 117 °C, einer Säurezahl von 16 bis 27 mg KOH/g, einer Verseifungszahl von 0 bis 95 mg KOH/g, einer Dichte von 0,91 bis 0,97 g/cm ³ und einer Viskosität bei 140 °C von 100 bis 700 mPa s,
B2) 1 bis 12 Gew.-% eines Polyolefins mit einer Dichte von 0,915 bis 0,935 g/cm³ und einen Schmelzpunkt von 100 bis 145 °C,
B3) 5 bis 15 Gew.-% eines Polyvinyl-Butyralharzes mit einem Schmelzpunkt von 135 bis 210 °C,
B4) 40 bis 60 Gew.-% Polyethylenglykol mit einem mittleren Molekulargewicht von 3.500 bis 20.000 g/mol, und
B5) 1 bis 10 Gew.-% einer Fettsäure mit 10 bis 24 Kohlenstoffatomen.

Im Rahmen der Erfindung stellte sich nämlich heraus, dass sich mit Hilfe des Bindemittels, enthaltend die kommerziell erhältlichen Komponenten B1) bis B5) eine Zusammensetzung erhalten lässt, die sich hervorragend als Bindemittel für CIM- bzw. MIM- Anwendungen eignet. Zudem stellte sich heraus, dass das in der Zusammensetzung enthaltene Bindemittel keine autokatalytische Reaktion während des Entbinderns durchläuft, wie etwa aus dem Stand der Technik bekannte Licomont-Systeme, so das der Entbinderungsprozess einfacher zu steuern ist.

Aus der erfindungsgemäßen Zusammensetzung können vorteilhafterweise in Großserie komplex geformte Keramikteile hergestellt werden, welche keine oder nur wenige Gefügefehler aufweisen. Zudem weist die erfindungsgemäße Zusammensetzung vorteilhafterweise eine hohe Stabilität und Homogenität auf und kann in einem großen Prozessfenster verarbeitet werden. Dies hat den Vorteil, dass auf eine zeitintensive Vorbemusterung verzichtet werden kann. Ein weiterer Vorteil der erfindungsgemäßen Zusammensetzung ist, dass die Zusammensetzung gute Fließeigenschaften aufweist, welches die Darstellung von komplexen Geometrien und langen Fließwegen bei großformatigen Bauteilen ermöglicht.

Die erfindungsgemäße Zusammensetzung zur Herstellung von Keramikteilen enthält als Komponente A) 25 bis 65 Vol.-% eines sinterbaren Keramikpulvers oder einer Mischung aus einem Keramik- und einem Metallpulver.

Beispiele für sinterbare Keramikpulver sind Pulver von Al₂O₃, Y₂O₃, SiO₂, ZrO₂, TiO₂, MgO, oder Al₂TiO₅, keramische Pulver wie Si₃N₄, MoSi₂, SiC, BN, B4C, AIN, TiC, TiN, TaC, Silikate und WC. Selbstverständlich können auch Mischungen der genannten keramischen Materialien und Mischungen von Keramiken und Metallen wie Hartmetalle (WC und Co) verwendet werden. Gemäß einer bevorzugten Ausführungsform umfasst das sinterbare Keramikpulver Al₂O₃ und/oder ZrO₂ und/oder Si₃N₄. Im Rahmen einer weiteren, besonders bevorzugten Ausführungsform der Erfindung umfasst das sinterbare Keramikpulver eine oder mehrere oxidische keramische Verbindungen, eine oder mehrere carbidische keramische Verbindungen, eine oder mehrere nitridische keramische Verbindungen oder eine Mischung davon. Beispielsweise kann die Keramikkomponente mindestens eine keramische Verbindung, ausgewählt aus der Gruppe bestehend aus Aluminiumoxid, Zirkoniumoxid, Bariumtitanat, Steatit, Blei-Zirkonat-Titanat (PZT), Siliziumcarbid, Aluminiumnitrid, Siliziumnitrid, Bornitrid, Siliziumoxid, Bariumoxid, Magnesiumoxid, Calziumoxid und Mischungen davon, umfassen beziehungsweise daraus bestehen. Besonders bevorzugt sind dabei Mischungen von Al₂O₃ und Al.

Beispiele für sinterbare Metallpulver sind Pulver von Fe, Al, Cu, Nb, Ti, Mn, V, Ni, Cr, Co, Mo, W und Si. Die Metallpulver können ebenso in Form von Legierungen eingesetzt werden, beispielsweise als Kupfer-basierte Legierung wie Messing, Bronze, Monel™ und Legierungen mit einem hohen Co-Anteil, wie Kovar™. Selbstverständlich können auch Mischungen der genannten Metalle verwendet werden

Die erfindungsgemäße Zusammensetzung zur Herstellung von Keramikteilen enthält als Komponente B1) 20 bis 35 Gew.-%, bevorzugt 27 bis 29 Gew.-% Polyolefinwachs(e) mit einem Tropfpunkt von 104 °C bis 117 °C, einer Säurezahl von 16 bis 27 mg KOH/g, einer Verseifungszahl von 0 bis 95 mg KOH/g, einer Dichte von 0,91 bis 0,97 g/cm³ und einer Viskosität bei 140 °C von 100 bis 700 mPa s. Das Polyolefinwachs hat folgende allgemeine Kenndaten:

| | |
|---|---|
| Tropfpunkt | 104 bis 117 °C |
| Säurezahl | 16 bis 27 mg KOH/g |
| Verseifungszahl | 0 bis 95 mg KOH/g |
| Dichte | 0,91 bis 0,97 g/cm³ |
| Viskosität | 100 bis 700 mPa s bei 140 °C |

Das bevorzugte Polyolefinwachs entsteht durch Massepolymerisation im Niederdruckverfahren nach Ziegler. Diese Polyolefinwachse können durch Behandeln der Schmelze mit Luft zu Oxidaten umgesetzt werden. Diese Wachse sind seit vielen Jahren kommerziell erhältlich. Das Polyolefinwachs verleiht dem in der erfindungsgemäßen Zusammensetzung enthaltenen organischen Bindemittel die eigentlichen thermoplastischen Eigenschaften und fungiert als so genannter "Viskositätssenker".

Die erfindungsgemäße Zusammensetzung zur Herstellung von Keramikteilen enthält als Komponente B2) 1 bis 12 Gew.-%, bevorzugt 3 bis 7 Gew.-% Polyolefin(e) mit einer Dichte von 0,915 bis 0,935 g/cm³ und einen Schmelzpunkt von 100 °C bis 145 °C. Bei dem Polyolefin handelt es sich bevorzugt um Polyolefine auf Polyethylenbasis mit den vorstehend beschriebenen Charakteristika. Gemäß einer bevorzugten Ausführungsform der Erfindung handelt es sich bei dem Olefin um low-density Polyethylen (LD-PE), welches seit vielen Jahren kommerziell erhältlich ist. Die Polyolefinkomponente verleiht der erfindungsgemäßen Zusammensetzung die notwendige Steifigkeit zur späteren Weiterverarbeitung.

Die erfindungsgemäße Zusammensetzung zur Herstellung von Keramikteilen enthält als Komponente B3) 5 bis 15 Gew.-%, bevorzugt 9 bis 11 Gew.-% Polyvinyl-Butyralharz (PVB-Harz) mit einem Schmelzpunkt von 135 °C bis 210 °C. Das Polyvinyl-Butyralharz weist gemäß einer bevorzugten Ausführungsform der Erfindung eine Glastemperatur von etwa 70 °C auf. Das Polyvinyl-Butyralharz hat gemäß einer bevorzugten Ausführungsform der Erfindung ein mittleres Molekulargewicht im Bereich von 30.000 bis 35.000 g/mol bevorzugt von etwa 35.000 g/mol, der Acetalisierungsgrad beträgt allgemein 80 % bis 88 %, und der PVOH Gehalt beträgt allgemein 11 % bis 14 %. Polyvinyl-Butyralharze sind seit vielen Jahren kommerziell erhältlich. Durch den Zusatz von Polyvinyl-Butyralharzen wird die Verarbeitbarkeit des Binders erleichtert, sie wirken als Emulgatoren und verbessern die Fließeigenschaften der erfindungsgemäßen Zusammensetzung.

Die erfindungsgemäße Zusammensetzung zur Herstellung von Keramikteilen enthält als Komponente B4) 40 bis 60 Gew.-%, bevorzugt 48 bis 52 Gew.-% Polyethylenglykol mit einem mittleren Molekulargewicht im Bereich von 3.500 bis 20.000 g/mol, bevorzugt mit einem mittleren Molekulargewicht im Bereich von 3.500 bis 8.000 g/mol, besonders bevorzugt mit einem mittleren Molekulargewicht im Bereich von 5.000 bis 7.000 g/mol. Derartige Polyethylenglykole seit langem kommerziell erhältlich. Das in der erfindungsgemäßen Zusammensetzung enthaltene Polyethylenglykol verleiht der Zusammensetzung die nötige Wasserlöslichkeit für die Entbinderung des Keramikteils.

Die erfindungsgemäße Zusammensetzung zur Herstellung von Keramikteilen enthält ferner als Komponente B5) 1 bis 10 Gew.-%, bevorzugt 3 bis 7 Gew.-% einer Fettsäure mit 10 bis 24 Kohlenstoffatomen. Die Fettsäure ist allgemein ausgewählt aus der Gruppe der gesättigten und einfach ungesättigten Fettsäuren. Gemäß einer bevorzugten Ausführungsform der Erfindung handelt es sich bei der Fettsäure um Stearinsäure. Die Fettsäurekomponente B5) hat wesentlichen Einfluss auf die Oberflächenspannung und somit auf die Benetzbarkeit des keramischen Pulvers durch das organische Bindemittel.

Die Herstellung und Verarbeitung der erfindungsgemäßen Zusammensetzung erfolgt auf folgende Weise:

Zur Herstellung der erfindungsgemäßen Binderkomponente, enthaltend die Komponenten B1), B2), B3), B4) und B5) werden die Komponenten B1), B2), B3) und B4) bei einer Temperatur im Bereich von 60 bis 160°C, bevorzugt im Bereich von 110 °C bis 160 °C, besonders bevorzugt bei etwa 150 °C, in einem geeigneten Rührgefäß, beispielsweise einem Kneter, aufgeschmolzen und beispielsweise unter Rühren/Kneten zu einer homogenen Schmelze verarbeitet. Unter Rühren/Kneten erfolgt abschließend die Zugabe der Fettsäurekomponente, Komponente B5) und der Ansatz wird abgekühlt. Das Rühren/Kneten dauert über den Abkühlvorgang an. Hat die Masse einen pastösen bis festen Zustand erreicht, kann sie aus dem Rührgefäß bzw. Kneter entfernt werden. Daraufhin kühlt die homogenisierte Masse bis auf Raumtemperatur ab und wird dann im Kneter zerkleinert. Bestandteile, die im Kneter nicht zerkleinert werden können, werden mit geeigneten Aggregaten, beispielsweise mit Hilfe von Scherwalzen, weiter zerkleinert. Die Binderkomponente ist nun einsatzfähig und kann anschließend mit dem keramischen Pulver, der Komponente A), weiter verarbeitet werden.

Zur Herstellung der erfindungsgemäßen (Spritzguss-) Zusammensetzung wird die organische Binderkomponente mit dem keramischen oder metallischen Pulver oder einer Mischung davon in einem geeigneten Aggregat bei ca. 150 °C homogenisiert. Die thermoplastische Knetmasse wird zu einem rieselfähigen Granulat, vorzugsweise durch Extrusion, zerkleinert und mittels einer Spritzgießmaschine zu einem keramischen Formteil verarbeitet.

Ein weiterer Gegenstand der vorliegenden Erfindung ist somit die Verwendung der erfindungsgemäßen Zusammensetzung oder erfindungsgemäß hergestellten Zusammensetzung zur Herstellung von Keramikteilen, insbesondere mittels des Keramikspritzgießverfahrens.

Das ausgeformte Formteil zeichnet sich im erkalteten Zustand durch hohe Grünfestigkeit aus.

Nach Durchführung dieses Verfahrens wird das Formteil verzugsfrei entwachst und gesintert.

Die nachfolgenden Beispiele veranschaulichen die Erfindung:

### Beispiel 1: Herstellung des erfindungsgemäßen Bindemittels

25 Gew.-% Polyolefinwachs (Tropfpunkt: 103 bis 109 °C, Säurezahl: 16 bis 27, Verseifungszahl: 30 bis 90, Dichte: 0,94 bis 0,96 g/cm³, Viskosität ca. 210 mPa s /140 °C), wurden mit 11 Gew.-% eines Polyolefins (Tropfpunkt: 130 bis 145 °C, Dichte: 0,91 bis 0,93 g/cm³) sowie 10 Gew.-% eines Polyvinylbutyral (Erweichungspunkt: ~125 °C, Dichte: 1,07 bis 1,2 g/cm³) dann 50 Gew.-% eines Polyethylenglykol (PEG) mit einem mittleren Molekulargewicht von 20.000 (Schmelzpunkt 60 bis 70 °C, Dichte: 1,1 bis 1,2 g/cm³) und 4 Gew.-% Stearinsäure im Kneter auf 180° erhitzt und eine Stunde lang homogenisiert, im Anschluss erfolgt das Abkühlen bei gleichzeitigem Kneten (ca. eine Stunde). Der so hergestellte Binder wird nun im festen Zustand zerkleinert und abgesiebt, der Grobanteil wird auf einer gekühlten Scherwalze zerkleinert.

### Beispiel 2: Herstellung des erfindunasaemäßen Bindemittels

29 Gew.-% Polyolefinwachs (Tropfpunkt: 103 bis 109 °C, Säurezahl: 16 bis 27, Verseifungszahl: 30 bis 90, Dichte: 0,94 bis 0,96 g/cm³, Viskosität ca. 210 mPa s / 140 °C), wurden mit 4 Gew.-% eines Polyolefins (Tropfpunkt: 130 bis 145 °C, Dichte: 0,91 bis 0,93 g/cm³) sowie 10 Gew.-% eines Polyvinylbutyral (Erweichungspunkt: ~125 °C, Dichte: 1,07 bis 1,2 g/cm³) und 50 Gew.-% eines PEG mit einem mittleren Molekulargewicht von 6.000 (Schmelzpunkt 55 bis 60 °C, Dichte: 1,1 bis 1,2 g/cm³) im Kneter eine halbe Stunde lang bei 160° homogenisiert, im Anschluss erfolgt die Zugabe von 7 Gew.-% Stearinsäure und gleichzeitig das Abkühlen der Masse bei anhaltendem Kneten. Der so hergestellte Binder wird nun im festen Zustand zerkleinert und abgesiebt, der Grobanteil wird auf einer gekühlten Scherwalze zerkleinert.

### Beispiel 3: Herstellung des erfindungsgemäßen Bindemittels

27 Gew.-% Polyolefinwachs (Tropfpunkt: 103 bis 109 °C, Säurezahl: 16 bis 27, Verseifungszahl: 30 bis 90, Dichte: 0,94 bis 0,96 g/cm³, Viskosität ca. 210 mPa s /140 °C), wurden mit 7 Gew.-% eines Polyolefins (Tropfpunkt: 130 bis 145 °C, Dichte: 0,91 bis 0,93 g/cm³) sowie 10 Gew.-% eines Polyvinylbutyral (Erweichungspunkt: ~125 °C, Dichte 1,07 bis 1,2 g/cm³) und 50 Gew.-% eines PEG mit einem mittleren Molekulargewicht von 6000 g/mol (Schmelzpunkt 55 bis 60 °C, Dichte 1 bis 1,2 g/cm³) in einem Kneter eine halbe Stunde lang bei 130 °C homogenisiert, im Anschluss erfolgt die Zugabe von 4 Gew.-% einfach gesättigte Fettsäure und gleichzeitig beginnt das Abkühlen der Masse bei anhaltendem Kneten. Der so hergestellte Binder wird nun im festen Zustand zerkleinert und abgesiebt, der Grobanteil wird auf einer gekühlten Scherwalze zerkleinert.

### Beispiel 4: Herstellung eines keramischen Spritzgießgranulats aus keramischem Pulver und erfindungsgemäß hergestelltem Bindemittel

Der erfindungsgemäße Binder, hergestellt nach Beispiel 1, 2 oder 3 und das keramische und/oder metallische Pulver werden in einem geeigneten Aggregat aufgeschmolzen und bei einer Temperatur von ca. 150 °C miteinander homogenisiert. Hierbei wird das keramische Pulver mit der Binderkomponente solange unter Temperatureintrag vermischt, bis eine absolut homogene Masse vorliegt; dies geschieht mit geeigneten Aggregaten. Die so hergestellte Formmasse kann nun zu einem Granulat weiterverarbeitet werden welches sich zur Formgebung durch Spritzguss eignet. Die thermoplastische Knetmasse wird zu einem rieselfähigen Granulat zerkleinert und auf einer Spritzgießmaschine zu einem Formteil verarbeitet.

### Entwachsung:

Die Entwachsung der Binderkomponenten der erfindungsgemäßen Formmasse erfolgt in einem Ofen im Temperaturbereich von 20 bis 400 °C unter Atmosphäre. Die Form des Formteils ist über die gesamte Dauer des Entwachsungs- und Sinterprozesses stabil. Nach Durchführung dieses Entbinderungsprozesses kann das entwachste Formteil auf Sintertemperatur gebracht werden.

## Patentansprüche

1. Zusammensetzung zur Herstellung von Keramikteilen, enthaltend
A) 25 bis 65 Vol.-% eines sinterbaren Keramikpulvers oder einer Mischung aus einem Keramik- und einem Metallpulver, und
B) 35 bis 75 Vol.-% einer Mischung aus:
B1) 20 bis 35 Gew.-% eines Polyolefinwachses mit einem Tropfpunkt von 104 bis 117°C, einer Säurezahl von 16 bis 27 mg KOH/g, einer Verseifungszahl von 0 bis 95 mg KOH/g, einer Dichte von 0,91 bis 0,97 g/cm³ und einer Viskosität bei 140 °C von 100 bis 700 mPa s,
B2) 1 bis 12 Gew.-% eines Polyolefins mit einer Dichte von 0,915 bis 0,935 g/cm³ und einen Schmelzpunkt von 100 bis 145 °C,
B3) 5 bis 15 Gew.-% eines Polyvinyl-Butyralharzes mit einem Schmelzpunkt von 135 bis 210 °C,
B4) 40 bis 60 Gew.-% Polyethylenglykol mit einem mittleren Molekulargewicht von 3500 bis 20000 g/mol, und
B5) 1 bis 10 Gew.-% einer Fettsäure mit 10 bis 24 Kohlenstoffatomen als Bindemittel.

2. Zusammensetzung nach Anspruch 1, **dadurch gekennzeichnet, dass** die Zusammensetzung als Komponente B5) Stearinsäure enthält.

3. Zusammensetzung nach Anspruch 1 oder 2, **dadurch gekennzeichnet, dass** die Zusammensetzung als Komponente B3) ein Polyvinyl-Butyralharz mit einer Glastemperatur von etwa 70 °C enthält.

4. Bindemittel, insbesondere zur Herstellung einer Zusammensetzung zur Herstellung von Keramikteilen, enthaltend
B1) 20 bis 35 Gew.-% eines Polyolefinwachses mit einem Tropfpunkt von 104 bis 117 °C, einer Säurezahl von 16 bis 27 mg KOH/g, einer Verseifungszahl von 0 bis 95 mg KOH/g, einer Dichte von 0,91 bis 0,97 g/cm³ und einer Viskosität bei 140 °C von 100 bis 700 mPa s,
B2) 1 bis 12 Gew.-% eines Polyolefins mit einer Dichte von 0,915 bis 0,935 g/cm³ und einen Schmelzpunkt von 100 bis 145 °C,
B3) 5 bis 15 Gew.-% eines Polyvinyl-Butyralharzes mit einem Schmelzpunkt von 135 bis 210 °C,
B4) 40 bis 60 Gew.-% Polyethylenglykol mit einem mittleren Molekulargewicht von 3500 bis 20000 g/mol, und
B5) 1 bis 10 Gew.-% einer Fettsäure mit 10 bis 24 Kohlenstoffatomen.

5. Verfahren zur Herstellung einer Zusammensetzung nach einem der Ansprüche 1 bis 3, umfassend den Verfahrensschritt Mischen der Komponenten B1) bis B4) bei einer Temperatur im Bereich von 110 bis 160 °C und anschlie-βendes Vermischen mit den Komponenten B5) und A).

6. Verwendung einer Zusammensetzung nach einem der Ansprüche 1 bis 3 zur Herstellung von Keramikteilen

7. Keramikteil, hergestellt aus Zusammensetzungen gemäß den Ansprüchen 1 bis 3.
